Europäisches Patentamt

European Patent Office

Office européen des brevets

(11) Veröffentlichungsnummer: **0 084 289**

A2

## (12) EUROPÄISCHE PATENTANMELDUNG

(21) Anmeldenummer: 82810268.1

(22) Anmeldetag: 16.06.82

(51) Int. Cl.³: **A 01 G 9/24**
**F 24 D 3/00**

(30) Priorität: 15.01.82 CH 228/82

(43) Veröffentlichungstag der Anmeldung:
27.07.83 Patentblatt 83/30

(84) Benannte Vertragsstaaten:
AT BE DE FR IT LU NL SE

(71) Anmelder: **Engel, Sylvie**
**Villa Tioutiou Boulevard Settimelli-Lazare**
**F-06230 Villefranche(FR)**

(72) Erfinder: **Engel, Sylvie**
**Villa Tioutiou Boulevard Settimelli-Lazare**
**F-06230 Villefranche(FR)**

(74) Vertreter: **von Düring, Bodo, Rechtsanwalt**
**Furrengasse 6**
**CH-6000 Luzern 5(CH)**

(54) Klimaboden für landwirtschaftliche, industrielle und Wohnzwecke aus Heizfolien oder Hohlkammerplatten mit integrierter Bewässerung und deren Installationssystem.

(57) Der Klimaboden ist eine Erfindung im Gebiet der Klimaanlagen für Freiluft- und Gewächshauskulturen, ist aber auch für Wohn- und industrielle Zwecke verwendbar. Eine Hohlkammerplatte (4.) über oder unter dem Mutterboden (9.) verwandelt die gesamte Bodenfläche in einen Wärmeabstrahler oder -aufnehmer.

Bei Einbau unter dem Mutterboden (9.) wird die Platte durch eine stoss- und schlagfeste Schicht vor Beschädigungen geschützt. Unter der Hohlkammerplatte (4.), die durch runde und/oder rechteckige Rohre (2. + 3.), an welche die Anschlussstücke (5.) angeschweisst und/oder geklebt sind, direkt mit der Heizanlage verbunden ist, wird eine Isolationsschicht (8.) angebracht. Das System lagert auf einer Randauflage (1.).

Einzelne Kanäle (12.) können zur Zufuhr von Frischwasser und Nährstoffen (10.) verwendet werden. Diese Kammern sind mit Schlitzen versehen (11.), durch welche das Wasser in das Erdreich austreten kann.

Bei der Hohlkammerplatte verändern sich die Durchmesser der Kanäle umgekehrt proportional zu ihrer Distanz zum Vor- bzw. Rücklaufventil, wodurch das Strömungsverhalten optimiert wird.

FG 1

ι.

## Beschreibung

ie vorliegende Erfindung ist im Gebiet der Klimaanlagen inzuordnen. Sie lässt sich zu Wohn-und industriellen Zwecken erwenden, vor allem jedoch zur landwirtschaftlichen Nutzung ür Freiluft-und Gewächshauskulturen.

ewächshäuser müssen zum Gedeihen der darin gezogenen Pflanen nur relativ niedrige Temperaturen aufweisen. Gleichzeitig st für die Photosynthese der Pflanzen jedoch die grösstmögiche Menge von Licht notwendig. Dieses kann nur durch Glasächer bereit gestellt werden. Eine wirkungsvolle Isolation erselben ist nicht möglich, da die Verbesserung der Wärmeämmung immer zu einer Verschlechterung des Lichteinfalles ührt. So kommt es, dass in derartigen Anlagen unverhältnisässig viel Energie für relativ niedrige Temperaturen benötigt ird.

)ie Beheizung von Gewächshäusern mit konventionellen Heizsystemen bietet jedoch noch ein weiteres Problem. Für das Geleihen der Pflanzen ist nämlich auch eine ausgesprochen hohe Luftfeuchtigkeit von Nöten. Dies führt bei den bisher angewenleten Heizsystemen zu enormen Korrosionsschäden, welche sehr aufwendige Unterhaltsarbeiten der Heizungsanlagen bedingen. Zudem muss die Luft in den Gewächshäusern je nach dem Wärmebedarf der darin gezogenen Kulturen künstlich mit Luftfeuchtigkeit angereichert werden.

Die Erfindung schafft Abhilfe, indem sie mit relativ niedrigem Energieaufwand ein angemessenes Klima zum optimalen Gedeihen der Pflanzen schafft. Gleichzeitig kann mit einfachsten Mitteln die automatische Bewässerung der Bepflanzungen bewerkstelligt werden.

Die durch die Erfindung erreichten Vorteile sind im wesentlichen darin zu sehen, dass die Wärme nur direkt an die Erde oder die die Pflanze umstreichende Luft abgegeben wird. Durch Verwendung von Wärmeträgern mit extrem grossen Oberflächen ist es möglich, die Beheizung mit niedrigsten Temperaturen durchzuführen. Diese beiden Modifikationen führen gegenüber konventionellen Heizsystemen zu einer frappanten Energieeinsparung. Hinzu kommt, dass die verwendeten Materialien korrosionsunempfindlich sind und daher einen praktisch wartungsfreien Betrieb von Gewächshäusern erlauben.

Im folgenden wird die Erfindung anhand von einer lediglich einen Ausführungsweg darstellenden Zeichnung näher erläutert.

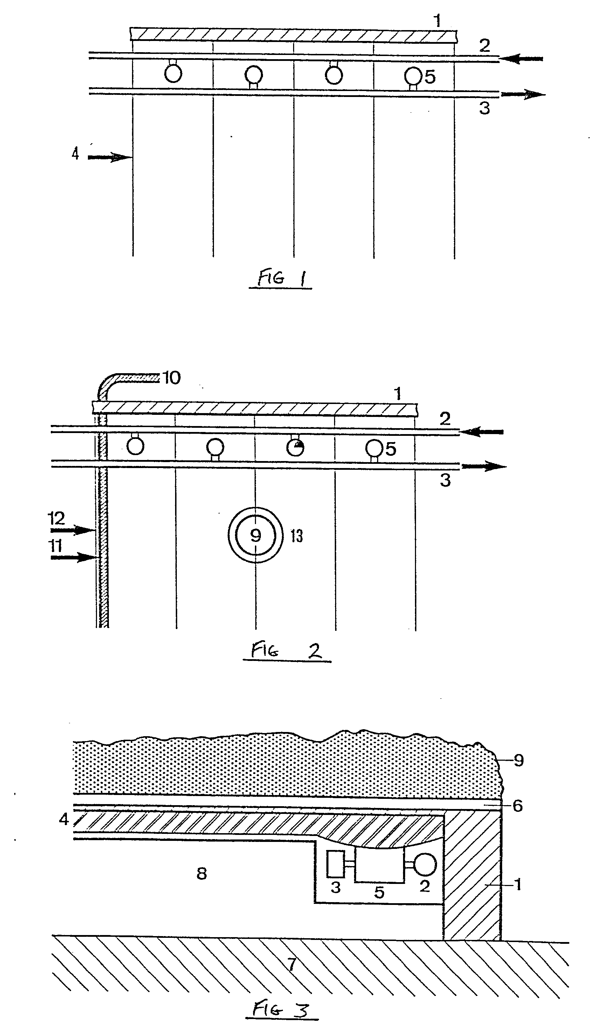

In Figur 3. wird der vertikale Aufbau des Klimabodens dargestellt. Der Kern desselben stellt die Hohlkammerplatte 4 dar. Diese besteht aus einem Deck-und einem Grundblatt, welche durch beliebig viele parallel verlaufende Wände miteinander verbunden sind. Diese Elemente formen eine Vielzahl parallel verlaufender Flüssigkeitsträger in der vorliegenden Erfindung. An den beiden Enden derselben werden sie zur Ein-und Ausführung der Aggregatsflüssigkeit quer miteinander verbunden, indem die vorher beschriebenen Querverstrebungen zwischen Deck-und Bodenblatt auf eine kurze Distanz weggelassen werden. Die Enden von Deck-und Bodenblatt werden durch Hitze miteinander verbunden. Es können aber auch Rohre verwendet werden, die quer zu den Kanälen angeschweisst oder verklebt werden.

In die so entstandenen Hohlkammerplatten wird an einem oder beiden Enden je ein Anschluss 5. für den Vor-und den Rücklauf 3. und 2. der Aggregatsflüssigkeit angebracht. Das Anschlussstück setzt sich z.B. aus einem auf die Hohlkammerstruktur angepassten Schraubenkopf und daran angepasste in der Mitte durchlässiger Schraube sowie einer darauf geschraubten Mutter zusammen. Durch die Hohlkammerstruktur des Schraubenkopfes ist das Anschlusstück im Klimaboden fest fixierbar. In einer anderen Ausführungsform können die Anschlussstücke auch aus einem Teil,z.B. aus Gummi-oder Kunststoff, bestehen, die in an.sich bekannter Weise mit der Platte verschweisst oder verklebt sind.

Zur Verbesserung des Strömungsverhaltens werden die Durchmesser der Kanäle der Hohlkammerplatte verändert. Sie verändern sich umgekehrt proportional zur Entfernung des jeweiligen Kanals zum Vor-oder Rücklaufventil 5.

Die Anschlussstücke werden mit einem Verbindungsrohr 2. und 3. verschweisst und/oder verklebt. Dabei ist ein Verbindungsrohr jeweils mit allen Vorlaufanschlussstücken 2. und das andere mit allen Rücklaufanschlussstücken 3. verbunden. Es ist von Bedeutung, dass die runden, ovalen oder rechteckigen Rohre querschnittsmässig gross genug bemessen werden, um auch eine Vielzahl von nebeneinander gelegten Platten mit dem Heizmedium versorgen zu können. Die Rohre können über-oder nebeneinander an der Ober-oder Unterseite der Platte 4. angebracht werden.

Die Hohlkammerplatten 4. können aus Metall, Polyaethylen, Polypropylen, Polyvinylalkohol, ABS, Copolymer, Acrylpolymer, vernetztem Polyaethylen oder Gummi hergestellt werden. Alle Materialien, ausser Metall, werden mit Zuschlagstoffen behandelt, um die Alterung und/oder Wärmeleitfähigkeit zu verbessern und/oder die Brennbarkeit herabzusetzen.

Die Figuren 1. und 2. zeigen die um 45° gedrehte Aufsicht der Figur 3.

In Figur 3. wird der vertikale Aufbau des Klimabodens für den landwirtschaftlichen Gebrauch beschrieben . Dabei wird als unterste Schicht eine Lage Isolationsmaterial 8., z.B. Styropor der Firma BASF verwendet, damit keine Wärme nach unten abgestrahlt werden kann. Darauf wird die oben beschriebene Hohlkammerplatte plaziert, durch die Aggregatsflüssigkeit zirkulieren kann. Diese wird, wie beschrieben, stirnseitig durch Fittings 5. an Vor-und Rücklauf 2. und 3. der Wärmequelle mittels Rohren oder Schläuchen angeschlossen. Die Fittings 5. und Leitungen 2. und 3. können metallisch und/oder aus Kunststoff und/oder aus Gummi hergestellt werden.

Die Hohlkammerplatten 4. ihrerseits sind zum Schutz gegen mechanische Beschädigungen und/oder zur besseren Wärme-und/oder Feuchtigkeitsverteilung mit einem Metallblech,- gitter oder einer hygroskopischen Schicht 6. abgedeckt. Darauf wird der Mutterboden 9. eingebracht, in welchem die Pflanzen gesetzt werden. Diese Anordnung des Klimabodens hat folgende Funktionsweise :

Das Heizmedium, vorzugsweise Wasser, wird mit einer nur wenige Grad über der zu erzielenden Endtemperatur liegenden Basistemperatur durch den Vorlauf in die Hohlkammerplatten 4. eingeleitet. Ueber die Anschlüsse des Rücklaufes wird es zur
Heizquelle zurückgeführt. Die Heizquelle kann durch fossile
Brennstoffe und/oder Sonnenkollektoren und/oder Wärmepumpen
und/oder elektrische Energie und/oder deren Kombination betrieben werden.

Durch die vorbeschriebene Erfindung wird der Mutterboden
gleichmässig erwärmt. Die Temperatur ist leicht und sehr
schnell regelbar. Die Pflanze erhält dadurch die für das
Wachstum notwendige Wärme im idealen Mass und mit grösstmöglicher Stabilität. Insbesondere kann der Klimaboden auf Temperaturunterschiede, erzeugt durch die Umgebungstemperatur
oder zusätzliche oder verminderte Sonneneinstrahlung unverzüglich reagieren. Zu diesem Zweck wird die Heizquelle über
Thermostate gesteuert.

Die vom Mutterboden aufsteigende Wärme streicht an dem Blattwerk und der Pflanze vorbei und wird so von dieser, soweit
notwendig, aufgenommen. Der Wärmeverlust durch die optimal
lichtdurchlässige Abdeckung ist somit minim.

Gleichzeitig ist die aus dem Mutterboden abgegebene Wärme
optimal mit Feuchtigkeit angereichert.

Durch die vorliegende Erfindung kann ausserdem gleichzeitig
die Bewässerung der Kulturen sichergestellt werden. Eine beliebige Anzahl der in den Platten vorhandenen Hohlkammern 12.
kann zu diesem Zweck anstatt mit Heizflüssigkeit mit Frischwasser 10. durchflossen werden. Die Seitenwände dieser Hohlkammern werden zu diesem Zweck auch an den Stirnseiten belassen. In das Ende der Hohlkammern wird auf eine Seite ein Wasseranschluss 10. eingesetzt. Dieser kann aus Metall-, Plastik-
oder Gummirohren bestehen. Die Hohlkammern werden nach oben
hin perforiert 11. , so dass das Wasser in den Boden eintreten kann. Auch hier werden sie von oben abgedeckt, vorzugsweise mit einer hygroskopischen oder kapillaraktiven Schicht,
z.B. Papier, so dass die Wurzeln nicht in die Perforation
hineinwachsen können.

Falls der Boden mit Metallblech oder Holzfaserplatten 6. abgedeckt ist, kann die Bewässerung durch darüber gelegte
Schläuche oder Schienen von unten her erfolgen. Die Erfin -
dung kann aber auch in Verbindung mit konventioneller Bewässerung, die von oben her erfolgt , verwendet werden.

Die vorliegende Erfindung kann jedoch auch auf dem Mutterboden aufgelegt werden. Dies ist in Figur  2. als Aufsicht
dargestellt. Zu diesem Zweck werden in die Hohlkammerplatten Durchbrüche geschnitten, die mit einm Rundkanal 13. versehen werden, so dass das Wasser in den unterbrochenen Hohlkammern trotzdem zirkulieren kann. In die Mitte dieser Durchbrüche wird jeweils eine Pflanze gesetzt. Bei dieser Installationsart kann wahlweise auf die Isolation unter der Hohlkammerplatte 4. verzichtet werden, je nach gewünschter
Bodentemperatur für die jeweilige Pflanzensorte. Auch die Abdeckung nach oben ist hier nicht von Nöten. Zur Bearbeitung
des Bodens kann die Hohlkammerplatte im übrigen, da nicht
fest montiert, leicht angehoben werden.

Im weiteren ist die Installation der Hohlkammerplatten 4. auch
derart möglich, dass sie in zwei oder mehreren unabhängigen   ,
Bahnen auf dem Mutterboden jeweilen rechts und links an den
Pflanzen vorbeigeführt werden. So ist die Zugänglichkeit an
der Pflanze und ihren Wurzeln am besten gewährt. Ebenfalls
besteht die Möglichkeit, den Mutterboden nur mit einzelnen
Schienen, Schläuchen, Streifen oder einzelnen Segmenten der
Hohlkammerplatte zu belegen, je nach gewünschter Wärmemenge
und -verteilung. Auch hier können einzelne Bahnen 12. der
Hohlkammerplatten zur Bewässerung der Kulturen benutzt werden.
Die betreffenden Hohlkammern sind an der Unter-oder Oberseite
mit Löchern 11. zum Wasseraustritt zu versehen.

Die Anwendungsvariante des Klimabodens auf dem Mutterboden
ist besonders für hochstämmige Pflanzen geeignet.

Der Klimaboden lässt sich auch mit Warmluft betreiben. In
diesem Falle sind zum Austritt der Warmluft Schlitze 11.
oder Löcher 11. im Deckblatt anzubringen. Dadurch wird die
Pflanze ständig von Warmluft umspült.

Die hier beschriebene Erfindung eines Installationssystems
von Hohlkammerplatten lässt sich als Boden-, Wand- oder
Deckenheizung zu Wohn-und Industriezwecken anwenden. In diesem Fall kommt die Hohlkammerplatte 4. immer mit der darunter liegenden Isolationsschicht 8. zur Verwendung.

Die Isolationsschicht wird an den Stirnseiten unterbrochen, um so Platz für die unter den Hohlkammerplatten 4. liegenden Vor-und Rücklaufzuführungen 2. und 3. zu gewähren. Nach diesen ist ein Steg 1. in Höhe der Isolationsschicht zuzüglich Hohlkammerplatte anzubringen, auf welchem die über den Hohlkammerplatten liegenden Metallbleche, Hartfaserplatten oder Schichten aus einem anderen stossfesten Material 6. aufgelegt werden können. Indem den Deckplatten 6. über dem Installationskanal nur eine geringfügig grössere Breite als dem Kanal selbst verliehen wird, kann eine leichte Zugänglichkeit zur Installation gewährt werden. So wird eine glatte Oberfläche erzeugt, auf die der Bodenbelag, z.B. Teppich, verlegt werden kann.

Die vorliegende Erfindung ist ausserdem auch in der Freiluftlandwirtschaft zu Klimatisierungszwecken verwendbar. Dabei steht vor allem der Frostschutz von kälteempfindlichen Freiluftkulturen im Vordergrund. Zu diesem Zweck wird der Klimaboden 4. auf der Isolationsschicht 8. in der Erde verlegt. Dabei kann die Tiefe entweder so gewählt werden, dass die Platte durch Erdbearbeitungsmaschinen nicht beschädigt werden kann oder der Boden kann zur Vorbeugung gegen derartige Beschädigungen mit einem stossfesten Material 6., wie oben erwähnt, abgedeckt werden. Durch diese Anordnung ist ein wirksamer und schneller Frostschutz der Freiluftkulturen möglich. Als Heizaggregat sind Flüssigkeiten aller Art, insbesondere frostsichere, verwendbar.

Durch den Einbau des Klimabodens in Freiluftkulturen lässt
sich die für Steinformationen typische Wärmereflektion in
der Nacht auch in anderen Bodenarten nachgestalten. Besonders in Verbindung mit Sonnenkollektoren kann so am Tage
gewonnene Sonnenwärme den Pflanzen durch Bodenwärme in der
Nacht zugeführt werden. Gerade im Frühling und Herbst haben
Schönwetterperioden nämlich die Eigenschaft, am Tage eine
besonders starke Sonnenwärme, in der Nacht jedoch einen
drastischen Temperaturabfall hervorzurufen. Dies kann durch
den Klimaboden auf einfache und billige Weise ausgeglichen
werden, wodurch eine bessere und schnellere Reifung der
landwirtschaftlichen Produkte erreicht wird.

Der Durchbruch bei der Entwicklung des vorliegenden Klimabodens gelang durch die Verwendung von Hohlkammerplatten,
welche eine fast gänzliche Ausnützung der Plattenfläche als
Wärmeabstrahler ermöglicht. Dadurch kann mit niedrigen Vorlauftemperaturen die gewünschte Heiztemperatur erreicht
werden. Dies ermöglicht insbesondere auch den Einsatz von
Solarenergie und Wärmepumpen. Durch diese Erfindung ist
daher erstmals der Einsatz einer Bodenheizung auch zu landwirtschaftlichen Zwecken möglich. Darüber hinaus lässt sich
mit dem beschriebenen Installationssystem auch jede Bodenheizung für industrielle und Wohnzwecke anschliessen. Bei
der hier beschriebenen Installationstechnik wird eine hohe
Betriebssicherheit gewährleistet, da die Verbindung zwischen den Vor-und Rücklaufrohren 2. und 3. mit den Hohlkammerplatten 4 auf eine minimale Länge verkürzt werden
konnte.

Für die Herstellung der hier beschriebenen Erfindung können ausschliesslich korrosionsfreie Materialien verwendet werden. Dadurch wird eine sehr hohe Lebensdauer der Installation gewährt, welche praktisch wartungsfrei ist.

Durch Ersatz der Hohlkammerplatte 4. mittels einer elektrischen Heizfolie im vorher beschriebenen Klimaboden(Figur 3.) lässt sich das gesamt System auch mit elektrischer Energie direkt betreiben.

Patentansprüche

1. Klimaboden für die Beheizung von Pflanzen bestehend aus einer Isolationsschicht und darüber liegender Hohlkammerplatte, durch die ein Heizmedium fliesst und die von einer Schutzschicht und dem Mutterboden bedeckt wird oder direkt auf letzterem liegt.

2. Ein Klimaboden gemäss Ziffer 1, bei welchem sich die Durchmesser der Kanäle in der Hohlkammerplatte umgekehrt proportional zu ihrer Distanz zum Vor- bzw. Rücklaufventil verändern.

3. Ein Klimaboden gemäss Ziffer 1 und 2, dessen Anschlussstücke für Vor-und Rücklauf direkt mit den Vor-und Rücklaufrohren zur Heizquelle verklebt und/öder verschweisst oder verschraubt sind.

4. Ein Klimaboden gemäss Ziffer 1-3, hergestellt aus Metall, Kunststoff oder Gummi, wobei die letzteren beiden mit Zuschlagstoffen behandelt sind, die deren Alterung und/ oder Wärmeleitfähigkeit verbessern und/öder die Brennbarkeit herabsetzen.

5. Ein Klimaboden gemäss den Ansprüchen Ziffer 1-3, in welchem einer oder mehrere Kanäle zu Bewässerungs-und Nährzwecken vom Heizsystem abgetrennt und mit Frischwasser versehen wird, welches durch Schlitze in den betreffenden Kanälen über eine hygroskopische Schicht in den Boden austreten kann.

6. Ein Klimaboden gemäss den Ansprüchen Ziffer 1-4, bei welchem die Hohlkammerplatte durch Schläuche, Rohre und/oder Schienen als Flüssigkeitsträger ersetzt wird.

7. Ein Klimaboden gemäss Ziffer 1-5, der auf dem Mutterboden verlegt wird und durch welchen die Pflanzen hindurchwachsen können, weil die Flüssigkeitsträger parallel zu den Pflanzungsreihen verlegt und/Oder in ihnen Aussparungen mit Rundkanälen vorgesehen sind.

8. Ein Klimaboden gemäss den Ansprüchen Ziffer 1-7 zur Verwendung in der Freiluftlandwirtschaft oder Gewächshäusern direkt im Boden oder auf dem Boden verlegt.

9. Die Verwendung des in Ziffer 1-3 beschriebenen Klimabodens für Raumheizungen in Böden, Decken und Wänden zu Wohn-und industriellen Zwecken.

10. Klimaboden gemäss Ziffer 1-8,gekennzeichnet dadurch, dass seine wärmeemittierende Oberfläche so gross ist, dass der Wärmebedarf der Pflanzen ganz, zumindest aber teilweise gedeckt wird.

11. Klimaboden gemäss Ziffer 1,6,8 und 10, gekennzeichnet dadurch, dass die Hohlkammerplatte durch eine elektrische Heizfolie ersetzt wird.

0084289

FIG 1

FIG 2

FIG 3